# EUROPEAN PATENT SPECIFICATION

(11) **EP 2 101 620 B1**
(45) Date of publication and mention of the grant of the patent: **15.09.2010**
(21) Application number: 07859524.6
(22) Date of filing: 27.12.2007
(51) Int. Cl.: A47J 36/34, F24C 15/10

(54) **COOKING APPLIANCE**
KOCHGERÄT
APPAREIL DE CUISSON

(30) Priority: 19.01.2007 TR 200700305
(43) Date of publication of application: 23.09.2009
(73) Proprietor: Vestel Beyaz Esya Sanayi Ve Ticaret A.S., 45030 Manisa (TR)
(72) Inventor: YILMAZ, Umut, 35150 Izmir (TR); PEKMEN, Halil, 35290 Izmir (TR)
(74) Representative: Cayli, Hülya
(86) International application number: PCT/IB2007/055313
(87) International publication number: WO 2008/087507

(56) References cited:
- EP-A- 1 106 931
- EP-A- 1 447 624
- WO-A-2008/020341
- WO-A1-2008/081394
- US-A- 5 356 646
- US-A1- 2004 118 394
- US-A1- 2006 016 798

## Description

### Technical Field

The present invention relates to cooking appliances, which prevent the occurrence of cholesterol increase and carcinogenic effect arising from cooking by supplying electrons to food, and thus allow the foods to maintain their vitamin values and tastes.

### Background Art

With respect to the background art, it is known that the carcinogenic effect is reduced of foods by regaining their electrons -which they lose during cooking- by means of an integrated system provided on the cooking vessels.

In the Patent US 5356646, the food within a cooking vessel provided with "+" and "-" poles completes the electrical circuit, thereby gaining the electrons resulting from the potential difference. In said invention; in order for the electrodes placed within said cooking vessel to perform electron supply, it is a requirement that a cooking liquid (oil, water, etc.) is provided therein. Such liquids constituting a requirement for completing the electrical circuit create a significant restriction for users. Additionally, the users are left to use only certain pots for ensuring the antioxidant effect. The wire grill contemplated for pots and solid foods as disclosed in that document can not provide a flexible and easy manner of use. Deterioration of food molecules takes place mostly on the lower wall of said cooking pot, corresponding to the zone with the highest cooking temperature. In this approach, any such deteriorated food molecules satisfy their electron lack back from the food molecules, until they reach the zone of electron supply. This fact reduces the system's efficiency.

In the patent document US6528768, another way of supplying electron is disclosed by means of a holder attachable to cooking vessels being electrically conductive. There, the holder of the vessel functions as the anode, whereas the vessel functions as the cathode. An energy supply is integrated to the vessel's holder in order to create an adequate potential difference between the minus (-) and plus (+) charges. With this approach, dependence occurs to the holder or lid of the vessel for ensuring the antioxidant effect.

As pointed out above, the electricity source is provided within the cooking vessel and the users are bound with such vessels to provide the antioxidant effect during cooking.

Another prior art document US 20061016798 proposes a solution for supplying electrons to the cooking vessel. The apparatus contains an electrochemical battery and an electrical circuit between that battery and cooking vessel, placed in the holder. An electric current flows through the circuit in order to supply electrons to the cooking vessel and the food. The apparatus has drawbacks as it's dependent on an electrical source to operate. The system is placed on a handle, which requires more room when it's intended to be used in a closed cooking device such as an oven.

Concerning the utility model application filed on 29.12.2006 with the general document number 230678 before the Turkish Patent Institute by Vestel Beyaz Esya Sanayi ve Ticaret Anonim Sirketi, cooking devices are being disclosed, which operate in an oxidation-preventing manner independent from the food's physical condition, by making use of cooking vessels made from any type of electrically-conductive materials to provide the user with the opportunity of cooking different foods at the same time. Thus, the requirement of using certain cooking vessels to ensure the antioxidant effect is eliminated. Furthermore, the system efficiency is enhanced by providing electron supply to a zone, where cooked foods start deteriorating. On the other hand, such type of devices must unfortunately be manufactured specifically with this purpose, or in order to use such oxidation-preventing arrangements in currently-used devices, such devices must be modified.

The document WO-2008/081 394 belongs to the prior art under Article 54(3) EPC and discloses a cooking appliance for supplying electrons to foods.

With respect to this invention, a cooking appliance is being disclosed, which prevent oxidation during cooking, irrespective of special cookers and/or cooking vessels. It is possible to use this appliance on any type of cooking appliances (cooking systems operated with gas, hot plates or vitroceramic hobs etc.). And any type of electrically-conductive pots is used as the cooking vessel. Thanks to the subject appliance, the oxidation-preventing cooking operation is conducted by means of an easily-manufactured and easily-used appliance without requiring new and special cooking devices or a special cooking vessel. Said appliance is positioned under the cooking vessel during cooking. For this reason, an intense electron supply is provided at the heating zone where food deterioration occurs at most. According to the present invention, the use of a thermocouple is preferred as the source of electrons. The heat from the cooker creates a potential difference between the two terminals of the thermocouple and the electron flow produced here is transferred to the vessel and to the food contained therein by means of contactors, which are connected to these terminals and are positioned so as to contact the cooking vessel from below. The reason for using the thermocouple is that it eliminates the necessity towards a separate energy input and/or connection as it is the case with other electron sources (transformers, batteries, wall plugs, etc.). The fact that thermocouples provide an electron flow once subjected to heat energy and does not require an electrical connection to an external source provides an advantage in their use.

Once the use of the subject appliance is finished, it is easily removed from the cooker (e.g. without necessitating the removal of any cable connection), placed elsewhere and conveniently washed, stored, etc.

### Objective of Invention

The objective of the present invention is to provide a cooking appliance, which reduces the formation of carcinogen and other substances increasing the cholesterol level in blood, which preserve the vitamin values by reducing the deterioration of vitamins during cooking, and which maintain the natural tastes of foods, all such targets achieved by means of reducing the oxidation that occurs in foods during cooking.

Another objective of the present invention is to provide a cooking appliance which provides antioxidant effect, easily produced and used, and gives the opportunity to conduct a hygienic cooking operation without requiring any special cooking devices and/or cooking vessels.

Yet another objective of the present invention is to provide an intense electron supply at heating zones where food deterioration occurs at most. ,

### Description of Figures

An illustrative embodiment of the subject cooking appliance is illustrated in annexed figures briefly described hereunder.
Figure 1 is a perspective view of the appliance layout.
Figure 2 is a side perspective view of the appliance layout.
Figure 3 is a schematic view of the electron supply conducted by means of the subject appliance.

The parts in said figures are individually enumerated as following.
Cooking appliance (A)
Food (in solid form) (1)
Cooking vessel (2)
Food (in liquid form) (3)
Contactors (5, 5')
Hob grid (6)
Source of electron (or thermocouple joint) (7)
Body (8)
Terminals of the source of electron (or terminals of the thermocouple) (9)
Gap (10)
Positioning element (11)
Grid arms (12)

### Description of Invention

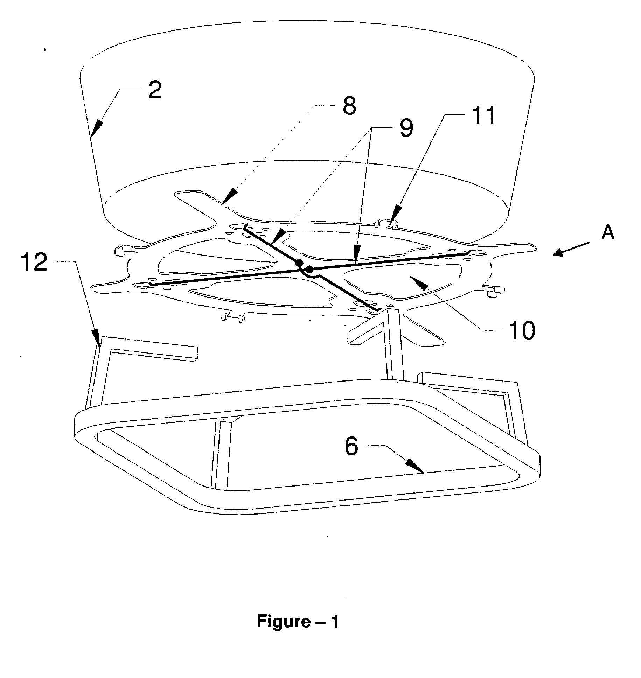

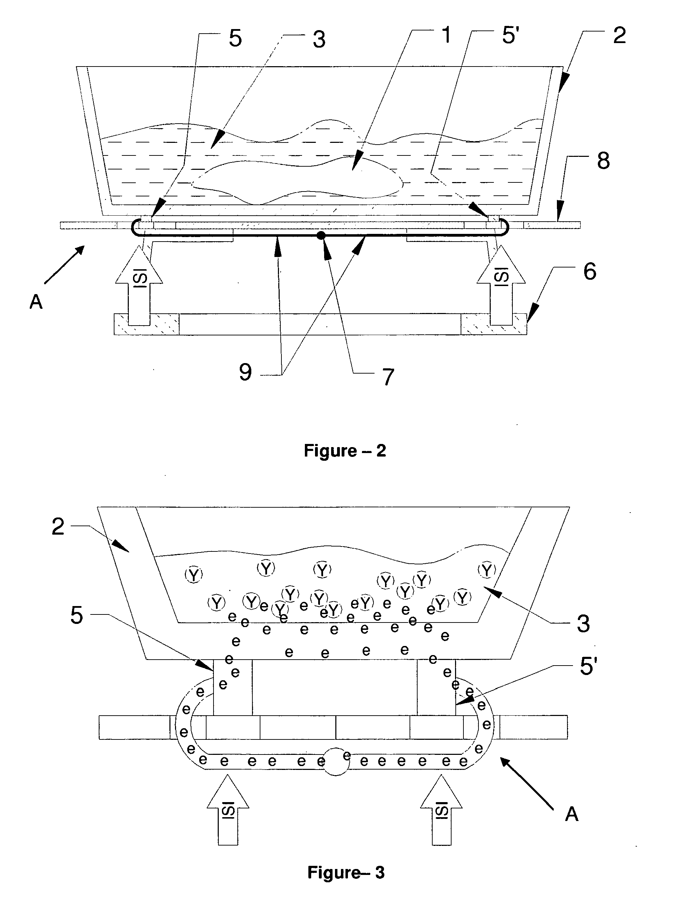

The present invention relates to cooking appliances, which provide electron supply to food during cooking for reducing or eliminating the occurrence of carcinogenic effect and cholesterol increase due to cooking, and which maintain the vitamin values and natural tastes of foods by reducing the deterioration of vitamins during cooking. An illustrative embodiment of this appliance is given in figures 1 and 2. The basic feature of the present invention is that it provides a system that reduces or eliminates oxidation. As indicated above, electrons are supplied to foods during cooking to reduce oxidation so that such foods regain the electrons they loose during cooking. In this manner, the cooking-based molecular deterioration of foods subjected to cooking is reduced or avoided.

The appliance (A) as shown in annexed figures (Figures 1-2) comprises a body (8) that is mobile for use on different heat sources, at least one electron source (7) in connection with said body (8), and at least one couple of electrically-conductive contactors (5, 5') positioned on said body (8) and where the terminals (9) of the source (7) is connected. When the appliance (A) is placed on a cooking source (e.g. gas burner cookers, hot plates, vitroceramic hob, etc.) that radiates heat energy, the source of electrons (7) on the appliance (A) becomes influenced from such heat energy so that a potential difference is created between both terminals (9). The flow of electrons originating from this potential difference is canalized from the contactors (5, 5') connected to the terminals (9) of the electron source (7) to the electrically-conductive cooking vessel (2) positioned on said contactors and to the food contained in said vessel (2). In this manner, the electrons which a food (either solid (1) and/or liquid food (3)) within the cooking vessel (2) loses during cooking are regained. Thus, oxidation in cooked foods is reduced. In a preferred embodiment of the present invention, a thermocouple joint is employed as the source of electrons (7). As known, a thermocouple is composed of a thermocouple joint and of terminals (legs) in connection with this joint. Therefore the thermocouple is positioned on the body (8) so that a temperature difference is produced between said joint (7) and said legs (9) when a cooking operation is started. When this temperature difference reaches a certain level, an electrical potential difference is provided between the terminals (9) of the thermocouple on an adequate level ensuring the desired antioxidant effect. So the source of electrons is provided with minus (-) and plus (+) poles.

In an exemplary embodiment of the present invention, gaps (10) are provided on the body (8) of the subject appliance (A), as illustrated in Figure 1. The objective of such gaps (10) provided on the body (8) of the subject appliance (A) placed on a heat source is to deliver the heat to the lower surface of a cooking vessel (2) in a relatively simpler manner.

Figures 1 and 2 provide an illustrative embodiment wherein the subject appliance (A) is used on the hob grid (6) of a gas burner cooker. In this exemplary embodiment, positioning elements (11) with recessed and/or protrusive formations formed on the body (8) are settled on the grid arms (12) and prevent the appliance's (A) lateral displacement during cooking. Said positioning elements (11) are embodied in different forms and sizes in line with the grid arms (12) or with the settling surfaces, avoiding the appliance's (A) displacement on the surface it is placed.

The contactors (5, 5') used in the subject appliance (A) may be stationary, or be movable such that at least one of the contact terminals for the cooking vessel extends outwardly under spring effect, and once a cooking vessel (2) is placed on itself, it becomes introduced into its slot. These movable contact terminals on said contactors (5, 5') can provide the required contact to the vessel (2), even if the lower surface of such cooking vessels (2) and/or the upper surface of the body (8) is/are not flat enough.

The electron supply carried out according to the subject cooking appliance is illustrated schematically in Figure 3. Since heat transfer occurs through the base of cooking vessels in cooking devices, the temperature of basal sections of inner volume of vessels becomes maximized so that food molecule deterioration starts there. In this system, electrons moving from the minus (-) to plus (+) poles of the electron source pass intensively through the inner and outer surfaces of the basal wall of the vessel, resulting in an electron-rich zone at the lower part of the inner volume of such vessels. As a result, food deterioration is avoided by transferring electrons to food molecules at the lower zone of a vessel, where the risk of deterioration is relatively higher.

Another significant feature of the present invention is provided in that the users can use their current cooking vessels (provided that they are electrically-conductive) for this purpose. In other words, there is no need to a special kind of cooking vessel. Additionally, this appliance is used for different cooking operations (e.g. frying, boiling, grilling, etc.) and on a large variety of cooking devices (e.g. gas burner cookers, heated, vitroceramic hobs, etc.).

Another feature of the present invention is that both solid and liquid foods can be cooked separately or together by means of such antioxidation method. Thanks to transferring any applied electron flow directly to the cooking vessel, solid or liquid materials in contact with the vessel are influenced from such electron flow and become charged with electrons during cooking.

In a preferred embodiment of the present invention, said body (8) is made in a plate form with concerns of lower-volume occupation and lower weights.

## Claims

1. A cooking appliance (A) used for supplying electrons to foods within electrically-conductive cooking vessels positioned on itself (A) during cooking, **characterized by** comprising
- a movable body (8);
- at least one source of electrons (7) in connection with said body (8);
- said source of electrons (7) being a thermocouple joint positioned on the body (8),
- at least one electrically-conductive couple of contactors (5, 5'), provided on said body (8) to which the terminals (9) of the thermocouple joint (7) are connected.

2. A cooking appliance (A) according to Claim 1, **characterized in that** gaps (10) are provided on said body (8) for heat transfer.

3. A cooking appliance (A) according to Claim 1, **characterized in that** positioning elements (11) with recessed and/or protrusive formations are provided on said appliance (A) preventing the latter (A) from displacing on the surface it is settled on.

4. A cooking appliance (A) according to Claim 1, **characterized in that** at least one of the contactors (5, 5') contacting the cooking vessel is movable so as to extend outwardly under spring effect and to become introduced into a slot when a cooking vessel (2) is placed on it.

5. A cooking appliance (A) according to Claim 1, **characterized in that** said contactors (5, 5') may be stationary.

6. A cooking appliance (A) according to Claim 1, **characterized in that** said body (8) is in the form of a plate to occupy relatively less space and to be of lower weight.

## Patentansprüche

1. Kochvorrichtung (A), die dazu verwendet wird, Nahrungsmitteln in elektrisch leitfähigen Kochgefäßen, die auf dieser Kochvorrichtung (A) abgestellt sind, während des Kochens Elektronen zuzuführen, **dadurch gekennzeichnet, dass** sie umfasst:
- ein bewegliches Hauptteil (8);
- mindestens eine mit dem Hauptteil (8) in Verbindung stehende Elektronenquelle (7);
- wobei es sich bei der Elektronenquelle (7) um ein am Hauptteil (8) angeordnetes Thermoelement handelt,
- mindestens ein am Hauptteil (8) vorgesehenes elektrisch leitendes Paar von Kontaktvorrichtungen (5, 5'), an welche die Endanschlüsse (9) des Thermoelements (7) angeschlossen sind.

2. Kochvorrichtung (A) nach Anspruch 1, **dadurch gekennzeichnet, dass** Aussparungen (10) am Hauptteil (8) zur Wärmeübertragung vorgesehen sind.

3. Kochvorrichtung (A) nach Anspruch 1, **dadurch gekennzeichnet, dass** vertieft und/oder erhöht ausgebildete Positionierungselemente (11) an der Vorrichtung (A) vorgesehen sind, um diese (A) daran zu hindern, sich auf der Fläche, auf der sie steht, zu verlagern.

4. Kochvorrichtung (A) nach Anspruch 1, **dadurch gekennzeichnet, dass** mindestens eine der das Kochgefäß kontaktierenden Kontaktvorrichtungen (5, 5') beweglich ist, um sich unter Federwirkung nach außen zu erstrecken und in einen Schlitz eingeführt zu werden, wenn ein Kochgefäß (2) darauf gestellt wird.

5. Kochvorrichtung (A) nach Anspruch 1, **dadurch gekennzeichnet, dass** die Kontaktvorrichtungen (5, 5') unbeweglich sein können.

6. Kochvorrichtung (A) nach Anspruch 1, **dadurch gekennzeichnet, dass** das Hauptteil (8) in Form einer Platte ist, um relativ weniger Platz einzunehmen und von geringerem Gewicht zu sein.

## Revendications

1. **Appareil** de cuisson (A) utilisé pour alimenter en électrons des aliments dans des récipients de cuisson électroconducteurs positionnés sur celui-ci (A) pendant la cuisson, **caractérisé en ce qu'**il comprend
- un corps mobile (8)
- au moins une source d'électrons (7) en liaison avec ledit corps (8) ;
- ladite source d'électrons (7) étant un joint à thermocouple positionné sur le corps (8);
- au moins un couple électroconducteur de contacteurs (5, 5') prévu sur ledit corps (8), auquel sont reliées les bornes (9) du joint à thermocouple (7).

2. Appareil de cuisson (A) selon la revendication 1, **caractérisé en ce que** des fentes (10) sont prévues sur ledit corps (8) pour le transfert de chaleur.

3. Appareil de cuisson (A) selon la revendication 1, **caractérisé en ce que** des éléments de positionnement (11) avec des formations évidées et/ou en saillie sont prévus sur ledit appareil (A) empêchant ce dernier (A) de se déplacer sur la surface, sur laquelle il est fixé.

4. Appareil de cuisson (A) selon la revendication 1, **caractérisé en ce qu'**au moins l'un des contacteurs (5, 5') contactant le récipient de cuisson est mobile de sorte à s'étendre vers l'extérieur sous l'effet de ressort et s'introduit dans une fente lorsque le récipient de cuisson (2) est placé dessus.

5. Appareil de cuisson (A) selon la revendication 1, **caractérisé en ce que** lesdits contacteurs (5, 5') peuvent être stationnaires.

6. Appareil de cuisson (A) selon la revendication 1, **caractérisé en ce que** ledit corps (8) est en forme de plaque afin d'occuper relativement moins d'espace et de présenter un poids plus faible.
